# FASCICULE DE BREVET EUROPEEN

(11) **EP 3 774 010 B1**
(45) Date de publication et mention de la délivrance du brevet: **28.12.2022**
(21) Numéro de dépôt: 19709726.4
(22) Date de dépôt: 08.03.2019
(51) Int. Cl.: A47J 43/07

(54) **OUTIL MELANGEUR POUR APPAREIL DE PREPARATION CULINAIRE**
MISCHWERKZEUG FÜR EINE LEBENSMITTELZUBEREITUNGSVORRICHTUNG
MIIXING TOOL FOR A FOOD PREPARATION APPLIANCE

(30) Priorité: 28.03.2018 FR 1852704
(43) Date de publication de la demande: 17.02.2021
(73) Titulaire: SEB S.A., 69130 Ecully (FR)
(72) Inventeur: GASC, Stéphanie, 53000 LAVAL (FR); BERTRAND, Nicolas, 61350 SAINT-MARS-D'ÉGRENNE (FR); BESSE, Aurélie, 72350 BRULON (FR)
(74) Mandataire: SEB Développement
(86) Numéro de dépôt international: PCT/EP2019/055920
(87) Numéro de publication internationale: WO 2019/185333

(56) Documents cités:
- GB-A- 2 470 914
- US-A1- 2006 171 251
- US-A1- 2008 253 224
- US-A1- 2012 081 993

## Description

L'invention concerne de manière générale un outil mélangeur pour un appareil de préparation culinaire, et un appareil de préparation culinaire équipé d'un tel outil mélangeur. En particulier, l'invention concerne un outil mélangeur pour effectuer des mélanges ou incorporations de compositions avec des textures différentes, dont une des compositions est dite délicate (par exemple des blancs en neige à mélanger avec une sauce béchamel ou du chocolat liquide).

Il est connu d'équiper des appareils de préparation culinaire d'outils mélangeurs pour effecteur automatiquement une opération de mélange mécanique, comme le montre le document GB 2 470 914 par exemple. Cependant, un tel appareil peut battre ou malaxer trop fortement les ingrédients du mélange, en particulier si l'utilisateur désire réaliser un mélange délicat, par exemple incorporer des œufs en neige dans un composé plus pâteux, comme du chocolat fondu (pour réaliser une mousse au chocolat) ou une sauce béchamel (pour réaliser un soufflé). En particulier, si l'outil mélangeur brasse trop longtemps la préparation, les œufs en neige peuvent retomber, ou si l'outil mélangeur brasse trop peu la préparation, alors la préparation n'est pas homogène.

Un des buts de l'invention est de remédier aux inconvénients mentionnés ci-dessus, et en particulier de proposer un outil mélangeur bien adapté pour mélanger des préparations délicates, pour effectuer rapidement un mélange homogène, en limitant les battements ou brassages inutiles.

A cet effet, un premier aspect de l'invention concerne un outil mélangeur pour un appareil de préparation culinaire, comprenant :
- une tête d'entraînement agencée pour s'accoupler avec un entraîneur de l'appareil de préparation culinaire, de sorte à entraîner l'outil mélangeur en rotation autour d'un axe de rotation,
- au moins deux bras de mélange agencés de part et d'autre de l'axe de rotation, et présentant chacun une largeur prédéfinie de sorte à définir au moins une ouverture agencée entre les deux bras de mélange,
caractérisé en ce qu'un premier bras de mélange présente une première largeur et en ce qu'un deuxième bras de mélange présente une deuxième largeur, inférieure à la première largeur.

L'outil mélangeur selon la mise en œuvre ci-dessus présente deux bras de mélange de largeurs différentes, si bien que l'ouverture est excentrée par rapport à l'axe de rotation. En conséquence le premier bras de mélange (de largeur la plus importante) va permettre une bonne incorporation, en poussant efficacement un composé dans l'autre, et la présence de l'ouverture permet toutefois de brasser correctement la préparation pour homogénéiser cette dernière.

Avantageusement, l'outil mélangeur comprend une ailette agencée sur le premier bras de mélange, du côté de la tête d'entraînement. L'ailette selon la mise en œuvre ci-dessus permet de ramener la préparation sur elle-même, comme le ferait un brassage manuel avec un mouvement d'une spatule directement manipulée par un utilisateur.

Avantageusement, l'ailette présente une largeur supérieure à la deuxième largeur.

Avantageusement, l'ailette présente une largeur égale à la première largeur ± 15%. Autrement dit, l'ailette présente une largeur similaire ou égale à la première largeur du premier bras de mélange.

Avantageusement, l'outil mélangeur comprend un cadre formant les bras de mélange et relié à la tête d'entraînement. Un tel cadre permet de procurer une résistance et une rigidité adéquates lors du brassage.

Avantageusement, le cadre est un cadre fermé, entourant l'ouverture. En d'autres termes, l'ouverture est une ouverture fermée, c'est-à-dire présentant un périmètre fermé.

Avantageusement, le cadre comprend, à l'opposé de la tête d'entraînement, une extrémité pointue formée par une jonction des bras de mélange. Une telle extrémité permet de bien s'adapter à la forme d'un récipient de travail de l'appareil de préparation culinaire, généralement en forme de bol.

Avantageusement, le cadre est formé en acier inoxydable, ou en aluminium.

Avantageusement, au moins l'un des bras de mélange comprend une lèvre de raclage. Une telle lèvre de raclage permet de garantir que toute la préparation sera travaillée, même à proximité du récipient de travail.

Avantageusement, les deux bras de mélange comprennent une lèvre de raclage, qui sont séparées l'une de l'autre au niveau de l'extrémité pointue par une encoche. Une telle encoche permet de limiter les contraintes à la pointe de l'outil mélangeur, tout en offrant la possibilité aux lèvres de raclage de s'enrouler l'une sur l'autre.

Avantageusement, la lèvre de raclage est formée par une matière élastique surmoulée sur le cadre.

Avantageusement, au moins une portion de périmètre de l'ouverture entre les bras de mélange est dépourvue de matière élastique surmoulée. En d'autres termes, l'ouverture est formée par le cadre lui-même et non par la matière de surmoulage.

Avantageusement, l'ouverture présente un périmètre fermé, et le périmètre de l'ouverture entre les bras de mélange est entièrement dépourvu de matière élastique surmoulée.

Avantageusement, la matière élastique surmoulée est formée par du silicone d'épaisseur 2 mm ± 0.5 mm au niveau des bras de mélange.

Avantageusement, la matière élastique surmoulée présente une dureté de 60 Shore A ± 5 Shore A.

Selon l'invention, les bras de mélange sont formés dans un plan contenant l'axe de rotation. L'outil mélangeur est alors de forme généralement plate.

Avantageusement, l'outil mélangeur comprend deux bras de mélange. Cela permet de limiter les sollicitations mécaniques sur la préparation.

Avantageusement, l'ouverture présente une portion de périmètre incurvée du côté des bras de mélange, et une portion de périmètre rectiligne du côté de la tête d'entraînement. Autrement dit, l'ouverture suit la forme extérieure de l'outil mélangeur.

Avantageusement, l'ouverture est décalée par rapport à l'axe de rotation.

Avantageusement, l'ouverture est asymétrique par rapport à l'axe de rotation.

Un deuxième aspect de l'invention concerne un appareil de préparation culinaire, comprenant :
- un outil mélangeur selon le premier aspect de l'invention,
- un entraîneur, agencé pour s'accoupler avec la tête d'entraînement de l'outil mélangeur,
dans lequel l'entraîneur est agencé pour entraîner l'outil mélangeur en rotation, en suivant une trajectoire épicycloïdale.

Avantageusement, l'appareil de préparation culinaire comprend un récipient agencé pour recevoir des aliments à préparer, dans lequel les bras de mélange de l'outil mélangeur sont agencés pour racler une paroi du récipient.

Avantageusement, l'appareil de préparation culinaire comprend une unité d'entraînement avec un train d'engrenage épicycloïdal.

Avantageusement, la première largeur du premier bras de mélange (y compris la lèvre de raclage) est supérieure à une valeur comprise dans une gamme de valeurs allant de 2 cm à 5 cm.

Avantageusement, la deuxième largeur du deuxième bras de mélange (y compris la lèvre de raclage) est supérieure à une valeur comprise dans une gamme de valeurs allant de 1 cm à 3 cm.

Avantageusement, l'ouverture occupe une position excentrée sur le cadre.

Avantageusement, l'ouverture présente une section de passage supérieure à 30 cm².

Avantageusement, l'ouverture présente une forme globale ovoïde, la pointe étant orientée vers le sommet du deuxième bras de mélange.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue d'ensemble éclatée en perspective d'un appareil de préparation culinaire comprenant un outil mélangeur selon la présente invention ;
- les figures 2 à 5 représentent des vues de l'outil mélangeur de la figure 1 ;
- la figure 6 représente une vue d'un cadre constitutif de l'outil mélangeur de la figure 1.

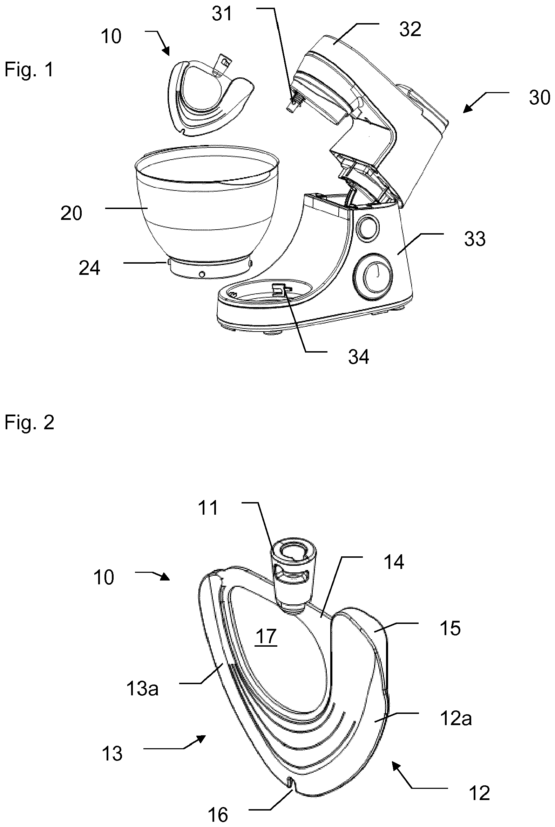

La figure 1 représente un appareil de préparation culinaire 30, avec un récipient rigide de travail 20, et un outil mélangeur 10. L'appareil de préparation culinaire 30 comprend typiquement un boîtier qui referme un moteur électrique d'entraînement, relié à une unité d'entraînement 32 qui présente un entraîneur 31, agencé pour s'accoupler avec l'outil mélangeur 10, et en particulier une tête d'entraînement 11 de l'outil mélangeur 10, visible aux figures 2 à 6.

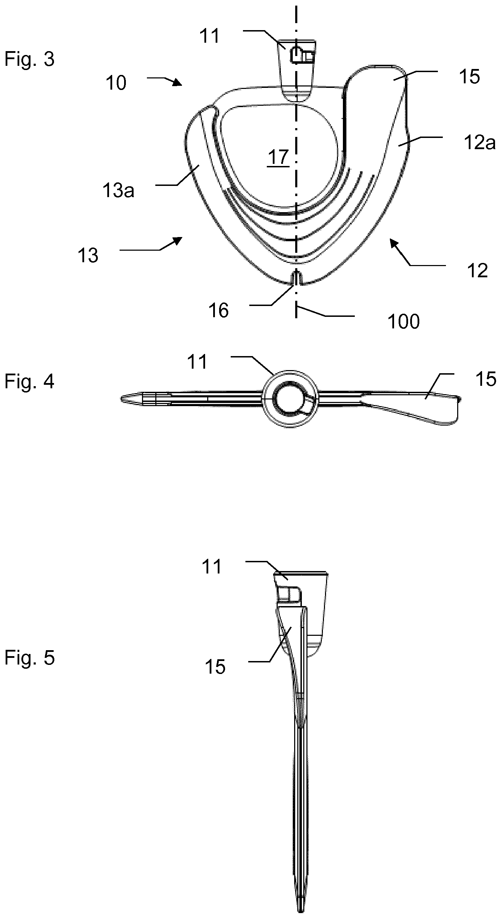

L'unité d'entraînement 32 peut comprendre un train d'engrenage épicycloïdal, pour entraîner l'outil mélangeur 10 en rotation autour d'un axe de rotation 100 (visible figure 3), tout en suivant une trajectoire épicycloïdale.

L'outil mélangeur 10 est agencé pour travailler des aliments à travailler reçus dans le récipient rigide de travail 20. A cet effet, le boîtier de l'appareil de préparation culinaire 30 est articulé, pour permettre de faire plonger l'outil mélangeur 10 dans le récipient rigide de travail 20, ou l'en dégager.

On peut noter que le récipient rigide de travail 20 comprend des moyens de verrouillage sur le boitier de l'appareil de préparation culinaire 30, via des plots 24 qui s'engagent dans des rainures 34 (pour former typiquement un accouplement de type baïonnette), afin de procurer un blocage (en rotation et en translation verticale) du récipient rigide de travail 20.

Enfin, l'appareil de préparation culinaire 30 comprend une interface homme machine 33 pour commander le fonctionnement (marche-arrêt, sélection de programme...).

Lors d'un programme de mélange de deux compositions dont une délicate pour réaliser une préparation délicate, l'invention propose d'utiliser l'outil mélangeur 10, pour obtenir rapidement un mélange homogène, tout en travaillant (par mélange mécanique ou malaxage...) le moins longtemps et le moins vite possible cette préparation délicate.

A cet effet, l'outil mélangeur 10 représenté des figures 2 à 5 comprend un premier bras de mélange 12 qui présente une première largeur, supérieure à une deuxième largeur d'un deuxième bras de mélange 13, une ouverture 17 étant ménagée entre le premier bras de mélange 12 et le deuxième bras de mélange 13.

En conséquence, comme on le voit bien figure 3, l'ouverture 17 est excentrée ou décalée par rapport à l'axe de rotation 100. Le premier bras de mélange (du fait de la première largeur qui est au moins supérieure à 4 cm) peut efficacement incorporer les compositions l'une dans l'autre. Le deuxième bras de mélange 13 (dont la deuxième largeur est au moins supérieure à 2.5 cm) apporte un brassage supplémentaire.

Comme vu ci-dessus, l'ouverture 17 est excentrée, si bien que cela contribue également à effectuer un mélange supplémentaire, en raison du mouvement de l'outil mélangeur 10 (en rotation autour de l'axe de rotation 100, tout en suivant une trajectoire épicycloïdale).

L'outil mélangeur 10 comprend également une ailette 15, d'épaisseur avantageusement comprise entre 0,5 et 1,2 cm, agencée sur la partie supérieure du premier bras de mélange 12, pour ramener efficacement la préparation au centre du récipient rigide de travail.

Chaque bras de mélange 12 et 13 de l'outil mélangeur 10 comprend une lèvre de raclage 12a et 13a respectivement formée en matériau élastique ou souple. En effet, en raison de la trajectoire épicycloïdale imposée à l'outil mélangeur 10, chacun du premier bras de mélange 12 et du deuxième bras de mélange 13 vient régulièrement à proximité du récipient rigide de travail 20. Les lèvres de raclage 12a et 13a ont alors pour effet d'épouser parfaitement la paroi du récipient rigide de travail, pour garantir que toute la préparation sera travaillée, même à proximité de la paroi du récipient rigide de travail 20.

De plus, visible figures 2 et 3, une encoche 16 est prévue entre la lèvre de raclage 12a et la lèvre de raclage 13a, à la pointe de l'outil mélangeur 10, c'est-à-dire à la jonction des deux bras de mélange 12 et 13 au niveau de l'axe de rotation 100, de sorte à éviter des efforts de traction et/ou cisaillement au sein du matériau formant les lèvres de raclage 12a et 13a, qui peuvent alors aussi s'enrouler l'une autour de l'autre en raison du mouvement de rotation, et parfaitement épouser le fond du récipient rigide de travail 20.

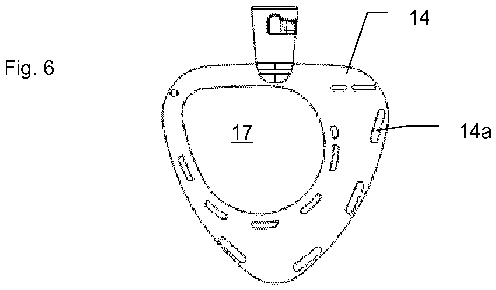

L'outil mélangeur 10 comprend typiquement un cadre 14 métallique (en acier inoxydable ou en aluminium), et on peut typiquement envisager de former les lèvres de raclage 12a et 13a avec du silicone surmoulé sur le cadre 14. On voit par exemple, figure 6, le cadre 14 seul avec des orifices 14a pour assurer une bonne qualité et accroche du matériau souple surmoulé.

Selon un mode de réalisation représenté, le périmètre de l'ouverture 17 est exempt de matière surmoulée, c'est-à-dire que c'est le cadre 14 qui forme et définit l'ouverture 17. Cette dernière présente une forme de goutte d'eau qui pointe vers l'extrémité supérieure du deuxième bras de mélange 13, qui est le plus fin.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

Ainsi dans une variante de réalisation non représentée, la lèvre de raclage pourra être détachable du cadre pour permettre son remplacement.

## Revendications

1. Outil mélangeur (10) pour un appareil de préparation culinaire (30), comprenant :
- une tête d'entraînement (11) agencée pour s'accoupler avec un entraîneur (31) de l'appareil de préparation culinaire, de sorte à entraîner l'outil mélangeur (10) en rotation autour d'un axe de rotation (100),
- au moins deux bras de mélange (12, 13) agencés de part et d'autre de l'axe de rotation (100), et formés dans un plan contenant l'axe de rotation, les deux bras de mélange (12, 13) présentant chacun, dans ledit plan, une largeur prédéfinie de sorte à définir au moins une ouverture (17) agencée entre les deux bras de mélange (12, 13),
- un premier bras de mélange (12) présentant une première largeur et un deuxième bras de mélange (13) présentant une deuxième largeur, inférieure à la première largeur, **caractérisé en ce que**
- la première largeur du premier bras de mélange est supérieure à 4 cm,
- la deuxième largeur du deuxième bras de mélange est supérieure à 2.5 cm.

2. Outil mélangeur (10) selon la revendication précédente, comprenant une ailette (15) agencée sur le premier bras de mélange (12), du côté de la tête d'entraînement (11).

3. Outil mélangeur (10) selon l'une des revendications précédentes, comprenant un cadre (14) formant les bras de mélange (12, 13) et relié à la tête d'entraînement (11).

4. Outil mélangeur (10) selon la revendication 3, dans lequel le cadre (14) comprend, à l'opposé de la tête d'entraînement (11), une extrémité pointue formée par une jonction des bras de mélange (12, 13).

5. Outil mélangeur (10) selon l'une des revendications 3 ou 4, dans lequel le cadre (14) est formé en acier inoxydable, ou en aluminium.

6. Outil mélangeur (10) selon l'une des revendications précédentes, dans lequel au moins l'un des bras de mélange (12, 13) comprend une lèvre de raclage (12a, 13a).

7. Outil mélangeur (10) selon la revendication précédente, dans sa dépendance à la revendication 4, dans lequel les deux bras de mélange (12, 13) comprennent une lèvre de raclage (12a, 13a), qui sont séparées l'une de l'autre au niveau de l'extrémité pointue par une encoche (16).

8. Outil mélangeur (10) selon l'une des revendications 6 ou 7, dans lequel la lèvre de raclage (12a, 13a) est formée par une matière élastique surmoulée sur le cadre (14).

9. Outil mélangeur (10) selon la revendication précédente, dans lequel au moins une portion de périmètre de l'ouverture (17) entre les bras de mélange est dépourvue de matière élastique surmoulée.

10. Outil mélangeur (10) selon l'une des revendications 8 ou 9, dans lequel l'ouverture (17) présente un périmètre fermé, et dans lequel le périmètre de l'ouverture (17) entre les bras de mélange est entièrement dépourvu de matière élastique surmoulée.

11. Outil mélangeur (10) selon l'une des revendications 8 à 10, dans lequel la matière élastique surmoulée est formée par du silicone d'épaisseur 2 mm ± 0.5 mm au niveau des bras de mélange.

12. Outil mélangeur (10) selon l'une des revendications 8 à 11, dans lequel la matière élastique surmoulée présente une dureté de 60 Shore A ± 5 Shore A.

13. Outil mélangeur (10) selon l'une des revendications précédentes, dans lequel l'ouverture (17) présente une portion de périmètre incurvée du côté des bras de mélange, et une portion de périmètre rectiligne du côté de la tête d'entraînement (11).

14. Appareil de préparation culinaire (30), comprenant :
- un outil mélangeur (10) selon l'une des revendications précédentes,
- un entraîneur (31), agencé pour s'accoupler avec la tête d'entraînement (11) de l'outil mélangeur (10),
dans lequel l'entraîneur (31) est agencé pour entraîner l'outil mélangeur (10) en rotation, en suivant une trajectoire épicycloïdale.

## Patentansprüche

1. Rührwerkzeug (10) für eine Küchenmaschine (30), umfassend:
- einen Antriebskopf (11), der so eingerichtet ist, dass er mit einem Antriebselement (31) der Küchenmaschine gekoppelt werden kann, um das Rührwerkzeug (10) um eine Drehachse (100) drehend anzutreiben,
- mindestens zwei Rührarme (12, 13), die beiderseits der Drehachse (100) eingerichtet und in einer Ebene gebildet sind, welche die Drehachse enthält, wobei die beiden Rührarme (12, 13) in dieser Ebene jeweils eine vordefinierte Breite aufweisen, sodass sie mindestens eine Öffnung (17) definieren, die zwischen den beiden Rührarmen (12, 13) eingerichtet ist,
- wobei ein erster Rührarm (12) eine erste Breite aufweist und ein zweiter Rührarm (13) eine zweite Breite aufweist, welche geringer ist als die erste Breite, **dadurch gekennzeichnet, dass**
- die erste Breite des ersten Rührarms mehr als 4 cm beträgt,
- die zweite Breite des zweiten Rührarms mehr als 2,5 cm beträgt.

2. Rührwerkzeug (10) nach dem vorstehenden Anspruch, das eine Schaufel (15) umfasst, die auf der Seite des Antriebskopfs (11) am ersten Rührarm (12) eingerichtet ist.

3. Rührwerkzeug (10) nach einem der vorstehenden Ansprüche, das einen Rahmen (14) umfasst, der die Rührarme (12, 13) bildet und mit dem Antriebskopf (11) verbunden ist.

4. Rührwerkzeug (10) nach Anspruch 3, wobei der Rahmen (14) auf der dem Antriebskopf (11) gegenüberliegenden Seite ein spitzes Ende umfasst, das von einer Verbindungsstelle der Rührarme (12, 13) gebildet wird.

5. Rührwerkzeug (10) nach einem der Ansprüche 3 oder 4, wobei der Rahmen (14) aus Edelstahl oder aus Aluminium gebildet ist.

6. Rührwerkzeug (10) nach einem der vorstehenden Ansprüche, wobei mindestens einer der Rührarme (12, 13) eine Abstreiflippe (12a, 13a) umfasst.

7. Rührwerkzeug (10) nach dem vorstehenden Anspruch in Abhängigkeit von Anspruch 4, wobei die beiden Rührarme (12, 13) eine Abstreiflippe (12a, 13a) umfassen, die am spitzen Ende durch eine Kerbe (16) voneinander getrennt sind.

8. Rührwerkzeug (10) nach einem der Ansprüche 6 oder 7, wobei die Abstreiflippe (12a, 13a) aus einem elastischen Material gebildet ist, das auf den Rahmen (14) aufgeformt ist.

9. Rührwerkzeug (10) nach dem vorstehenden Anspruch, wobei mindestens ein Umfangsabschnitt der Öffnung (17) zwischen den Rührarmen frei von aufgeformtem elastischem Material ist.

10. Rührwerkzeug (10) nach einem der Ansprüche 8 oder 9, wobei die Öffnung (17) einen geschlossenen Umfang aufweist, und wobei der Umfang der Öffnung (17) zwischen den Rührarmen komplett frei von aufgeformtem elastischem Material ist.

11. Rührwerkzeug (10) nach einem der Ansprüche 8 bis 10, wobei das aufgeformte elastische Material aus Silikon mit einer Dicke von 2 mm ± 0,5 mm an den Rührarmen gebildet ist.

12. Rührwerkzeug (10) nach einem der Ansprüche 8 bis 11, wobei das aufgeformte elastische Material eine Härte von 60 Shore A ± 5 Shore A aufweist.

13. Rührwerkzeug (10) nach einem der vorstehenden Ansprüche, wobei die Öffnung (17) auf der Seite der Rührarme einen gekrümmten Umfangsabschnitt, und auf der Seite des Antriebskopfs (11) einen geradlinigen Umfangsabschnitt aufweist.

14. Küchenmaschine (30), umfassend:
- ein Rührwerkzeug (10) nach einem der vorstehenden Ansprüche,
- ein Antriebselement (31), das so eingerichtet ist, dass es mit dem Antriebskopf (11) des Rührwerkzeugs (10) gekoppelt werden kann,
wobei das Antriebselement (31) so eingerichtet ist, dass es das Rührwerkzeug (10) drehend antreibt, wobei es einer epizyklischen Bahn folgt.

## Claims

1. Mixing tool (10) for a food preparation appliance (30), comprising:
- a driving head (11) arranged such that it couples to a driver (31) of the food preparation appliance in such a way as to rotate the mixing tool (10) about a rotational axis (100),
- at least two mixing arms (12, 13) arranged either side of the rotational axis (100), and formed in a plane containing the rotational axis, the two mixing arms (12, 13) each having, in said plane, a width which is predefined so as to define at least one opening (17) arranged between the two mixing arms (12, 13),
- a first mixing arm (12) having a first width and a second mixing arm (13) having a second width, which is shorter than the first width, **characterised in that**
- the first width of the first mixing arm is longer than 4cm,
- the second width of the second mixing arm is longer than 2.5cm.

2. Mixing tool (10) according to the preceding claim, comprising a blade (15) arranged on the first mixing arm (12), on the side of the driving head (11).

3. Mixing tool (10) according to one of the preceding claims, comprising a frame (14) forming the mixing arms (12, 13) and connected to the driving head (11).

4. Mixing tool (10) according to claim 3, wherein the frame (14) comprises, opposite the driving head (11), a sharp end formed by a joining of the mixing arms (12, 13).

5. Mixing tool (10) according to one of claims 3 or 4, wherein the frame (14) is formed of stainless steel, or of aluminium.

6. Mixing tool (10) according to one of the preceding claims, wherein at least one of the mixing arms (12, 13) comprises a scraping lip (12a, 13a).

7. Mixing tool (10) according to the preceding claim, dependent on claim 4, wherein the two mixing arms (12, 13) comprise a scraping lip (12a, 13a), which are separated from one another at the sharp end by a notch (16).

8. Mixing tool (10) according to one of claims 6 or 7, wherein the scraping lip (12a, 13a) is formed by an elastic material overmoulded on the frame (14).

9. Mixing tool (10) according to the preceding claim, wherein at least one perimeter portion of the opening (17) between the mixing arms has no overmoulded elastic material.

10. Mixing tool (10) according to one of claims 8 or 9, wherein the opening (17) has a closed perimeter, and wherein the perimeter of the opening (17) between the mixing arms has completely no overmoulded elastic material.

11. Mixing tool (10) according to one of claims 8 to 10, wherein the overmoulded elastic material is formed by silicone of thickness 2mm ± 0.5mm at the mixing arms.

12. Mixing tool (10) according to one of claims 8 to 11, wherein the overmoulded elastic material has a hardness of 60 Shore A ± 5 Shore A.

13. Mixing tool (10) according to one of the preceding claims, wherein the opening (17) has a curved perimeter portion on the side of the mixing arms, and a rectilinear perimeter portion on the side of the driving head (11).

14. Food preparation appliance (30), comprising:
- a mixing tool (10) according to one of the preceding claims,
- a driver (31), arranged such that it couples to the driving head (11) of the mixing tool (10),
wherein the driver (31) is arranged to rotate the mixing tool (10), along an epicyclic trajectory.
